# FASCICULE DE BREVET EUROPEEN

(11) **EP 3 254 875 B1**
(45) Date de publication et mention de la délivrance du brevet: **02.01.2019**
(21) Numéro de dépôt: 17169344.3
(22) Date de dépôt: 03.05.2017
(51) Int. Cl.: B60J 5/04, B60J 5/10

(54) **SOUS-ENSEMBLE COMPRENANT DEUX PARTIES ASSEMBLEES ENTRE ELLES PAR UN CORDON DE COLLE ET VEHICULE COMPORTANT UN TEL SOUS-ENSEMBLE**
UNTEREINHEIT, DIE ZWEI MIT HILFE EINER KLEBENAHT ZUSAMMENGEBAUTE TEILE UMFASST, UND FAHRZEUG, DAS EINE SOLCHE UNTEREINHEIT UMFASST
SUBASSEMBLY COMPRISING TWO PARTS ASSEMBLED TOGETHER BY A BEAD OF ADHESIVE AND VEHICLE INCLUDING SUCH A SUBASSEMBLY

(30) Priorité: 08.06.2016 FR 1655271
(43) Date de publication de la demande: 13.12.2017
(73) Titulaire: PSA Automobiles SA, 78300 Poissy (FR)
(72) Inventeur: MAUVAIS, Frédéric, 25150 AUTECHAUX-ROIDE (FR)

(56) Documents cités:
- EP-A1- 2 653 331
- FR-A1- 2 965 241

## Description

La présente invention concerne un sous-ensemble, notamment de véhicule. Elle concerne en particulier un sous-ensemble constitué par une peau extérieure d'habillage, par exemple d'un hayon d'un véhicule, et par des éléments de renforts destinés à rigidifier ladite peau extérieure d'habillage.

La présente invention concerne plus particulièrement un tel sous-ensemble qui comprenant un élément de structure et une pièce de renfort où la pièce de renfort est rigidement solidarisée par un cordon de colle à l'élément de structure.

Il est connu du document EP2653331 d'avoir une peau extérieure d'habillage d'un hayon d'un véhicule qui comporte des éléments de renforts collés par des cordons de colle le long de la face intérieure de la peau extérieure d'habillage. Avec le temps, les extrémités des cordons de colle de ces éléments de renfort ont tendance à se fissurer et/ou à se décoller. Cela est dû à une concentration de contraintes au niveau des extrémités du cordon de colle lors de la fermeture ou de l'ouverture du hayon. De telles contraintes résultent d'un mouvement de torsion de la peau extérieure d'habillage du hayon lors de ces phases d'utilisation. Une telle dégradation du cordon de colle entraîne alors une difficulté à fermer ou à ouvrir le hayon. Une telle difficulté provient d'un positionnement dégradé d'une première partie de la serrure, telle qu'une gâche, solidaire du bas du hayon, qui n'est plus correctement positionnée vis-à-vis d'une seconde partie de la serrure, telle qu'un pêne rotatif, solidaire de la structure du véhicule. Il est important que ces deux parties de la serrure restent bien positionnées l'une par rapport à l'autre pour assurer le bon fonctionnement de la serrure du hayon du véhicule.

L'invention a pour objectif de pallier à ces problèmes et de proposer un élément de structure sur lequel est rigidement solidarisée, par un cordon de colle, une pièce de renfort. Le cordon de colle, selon l'invention, doit présenter une bonne tenue dans le temps, sans l'apparition de dégradations telles que des décollements ou l'apparition de fissures à ces extrémités. Une telle invention devant se faire sans rajouter des moyens de fixation supplémentaires ou sans modifier le type de colle utilisée, de manière à ne pas impacter le coût de production de l'élément de structure ainsi assemblé.

Plus particulièrement, l'invention a pour objet un sous-ensemble comportant un élément d'habillage et un élément de renfort conformément à l'objet de la revendication 1.

Selon l'invention, la partie en demi-cercle présente un diamètre de courbure, de préférence d'au moins 5 mm. Un dessous de 5 mm de diamètre de courbure, le niveau de contrainte qui s'applique sur cette extrémité est supérieur à une valeur seuil qui ne permet pas d'éviter des décollements ou l'apparition de fissures dans cette extrémité du cordon de colle.

Selon une première caractéristique de l'invention, l'élément de renfort comporte une surface de fixation le long de laquelle est positionné le cordon de colle. La surface de fixation présente une forme allongée. La partie courbée du cordon de colle est positionnée à proximité d'une des extrémités libres de la surface de fixation de l'élément de renfort.

Selon une deuxième caractéristique de l'invention, l'extrémité libre de de la surface de fixation de l'élément de renfort comporte une excroissance latérale qui forme un support à une partie de la partie courbée du cordon de colle.

Selon une troisième caractéristique de l'invention, le sous-ensemble comporte aussi un élément de doublure qui forme un support pour l'élément de renfort et pour l'élément d'habillage. L'élément de doublure comporte des pattes de fixation pour solidariser directement l'élément de doublure à l'élément d'habillage.

Selon un mode de réalisation de l'invention, l'élément de d'habillage est formé par une peau extérieure d'habillage d'un hayon, le sous-ensemble constituant un hayon d'un véhicule automobile.

Selon un second mode de réalisation de l'invention, l'élément de d'habillage est formé par une peau extérieure d'habillage d'une porte, le sous-ensemble constituant une porte d'un véhicule automobile.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
- la figure 1 représente une peau extérieure d'habillage d'un hayon d'un véhicule en cours d'assemblage sur une doublure de hayon et comportant des éléments de renfort solidarisés, d'une part sur la doublure et d'autre part sur la peau extérieure d'habillage au moyen de cordons de colle selon l'invention ; et
- la figure 2 représente une vue de détail d'un élément de renfort comportant un cordon de colle selon l'invention.

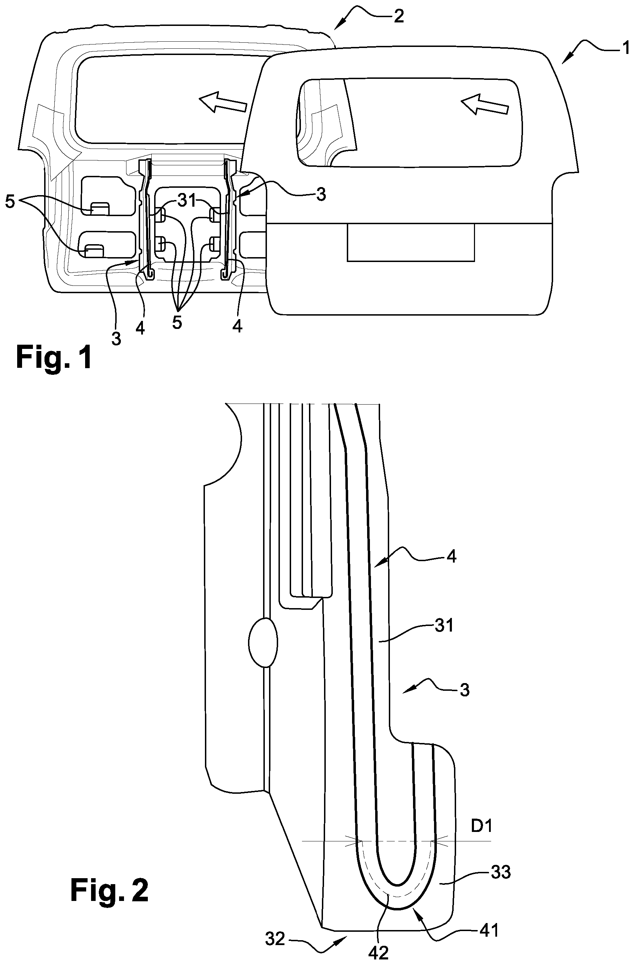

La figure 1 représente une peau extérieure d'habillage 1 d'un hayon d'un véhicule en cours d'assemblage sur une doublure 2 de hayon. La doublure 1 comporte des éléments de renfort 3 destinés à être collés par des cordons de colle 4 le long de la face intérieure de la peau extérieure d'habillage 1. La doublure 2 comporte aussi des pattes de fixation 5 qui sont collées le long de la face intérieure de la peau extérieure d'habillage 1. Les éléments de renfort 3 sont soudés par des points de soudage sur la doublure 2. Les éléments de renfort 3 et la doublure 2 sont généralement réalisés dans une matière métallique adaptée à une telle fixation par des points de soudage. Les pattes de fixation 5 viennent de matière avec la doublure 2 et sont formées lors de l'étape de formage de la doublure 2. La peau extérieure d'habillage 1 peut être en matière composite ou en métal. La fixation par collage permet de s'adapter à tous types de matière de la peau extérieure d'habillage 1 et permet aussi de ne pas marquer la face visible de la peau extérieure d'habillage 1 tel que le ferait une fixation par des points de soudage (pour une peau extérieure d'habillage 1 en métal). Lors de l'assemblage de la peau extérieure d'habillage 1 sur la doublure 2, les cordons de colle 4 sont préalablement formés le long de surfaces de fixation 31 de chaque élément de renfort 3. Des points de colle sont aussi formés le long des extrémités libres des pattes de fixation 5. La peau extérieure d'habillage 1 est alors positionnée contre la doublure 2 et l'ensemble est maintenu en position le temps que les différents collages se solidifient.

La figure 2 représente une vue de détail d'une extrémité inférieure 32 d'un des deux éléments de renfort 3. Sur cette figure est plus particulièrement visible la forme de l'extrémité inférieure du cordon de colle 4. L'extrémité inférieure du cordon de colle 4 vient en bordure de l'extrémité inférieure 32 de l'élément de renfort 3, en formant une partie courbée 41. La partie courbée 41 de l'extrémité inférieure du cordon de colle 4 comporte une partie en demi-cercle 42 qui présente un diamètre D1 d'au moins 5 mm. Un diamètre D1 inférieur à 5 mm de la partie courbée 41 ne permet pas de répartir de manière uniforme les contraintes d'arrachement qui apparaissent sur l'extrémité inférieure du cordon de colle 4 lors de l'ouverture ou lors de la fermeture du hayon. Pour permettre la réalisation de la partie courbée 41, l'extrémité inférieure 32 de l'élément de renfort 3 comporte une excroissance latérale 33 qui prolonge latéralement la surface de fixation 31 de l'élément de renfort 3. Les contraintes d'arrachement qui apparaissent sur l'extrémité inférieure du cordon de colle 4 lors de l'ouverture ou lors de la fermeture du hayon sont ainsi réparties de manière homogène le long de la partie en demi-cercle 42 de la partie courbée 41 du cordon de colle 4. Une telle répartition homogène permet d'éviter d'avoir une concentration des contraintes sur une faible partie du cordon de colle 4. Une telle partie courbée 41 de l'extrémité inférieure du cordon de colle 4 permet ainsi de maintenir la rigidité en torsion du hayon et donc le bon fonctionnement de la serrure de coffre du hayon.

Dans l'exemple tel que représenté, deux parties courbées 41 sont formées aux deux extrémités inférieures de deux cordons de colle 4 de deux éléments de renfort 3. Suivant les contraintes pouvant apparaitre sur le cordon de colle, il peut être intéressant de former une partie courbée à chacune des deux extrémités de chaque cordon de colle. Une telle partie latérale 33 de l'élément de renfort 3 ne modifie que faiblement l'encombrement latéral de la pièce de renfort 3, ne modifiant pas le processus d'assemblage de la pièce de renfort 3 sur la doublure 2. La réalisation d'une telle extrémité en partie courbée 41 du cordon de colle 4 ne modifie pas non plus les moyens utilisés pour le positionnement d'un cordon de colle ne comportant pas une telle partie courbée. Si dans l'exemple tel que représenté, un tel cordon de colle est utilisé pour un hayon d'un véhicule, un tel cordon de colle peut aussi être utilisé pour toutes autres parties du véhicule qui comporte une peau d'habillage et un élément de renfort maintenu contre la peau d'habillage par un cordon de colle. Comme par exemple des portes du véhicule, un capot moteur ou un pavillon de toit.

## Revendications

1. Sous-ensemble comportant un élément d'habillage (1) et un élément de renfort (3), l'élément de renfort (3) étant rigidement solidarisé par un cordon de colle (4) à l'élément d'habillage (1), **caractérisé en ce qu'**au moins une extrémité du cordon de colle (4) comporte une partie courbée (41) qui présente une partie en demi-cercle (42).

2. Sous-ensemble selon la revendication 1, **caractérisé en ce que** ladite partie en demi-cercle (42) présente un diamètre de courbure (D1) d'au moins 5 mm.

3. Sous-ensemble selon la revendication 1 ou 2, **caractérisé en ce que** l'élément de renfort (3) comporte une surface de fixation (31) le long de laquelle est positionnée le cordon de colle (4), ladite surface de fixation (31) présentant une forme allongée.

4. Sous-ensemble selon la revendication 3, **caractérisé en ce que** la partie courbée (41) du cordon de colle (4) est positionnée à proximité d'une des extrémités libres de la surface de fixation (31) de l'élément de renfort (3).

5. Sous-ensemble selon la revendication 4, **caractérisé en ce que** ladite extrémité libre de la surface de fixation (31) de l'élément de renfort (3) comporte une excroissance latérale (33) qui forme un support à une partie de la partie courbée (41) du cordon de colle (4).

6. Sous-ensemble selon l'une quelconque des revendications précédentes, **caractérisé en ce que** le sous-ensemble comporte aussi un élément de doublure (2) qui forme un support pour l'élément de renfort (3) et pour l'élément d'habillage (1).

7. Sous-ensemble selon la revendication précédente, **caractérisé en ce que** l'élément de doublure (2) comporte des pattes de fixation (5) lui permettant d'être directement solidarisé à l'élément de doublure (2) et à l'élément d'habillage (1).

8. Véhicule comportant un sous-ensemble selon l'une quelconque des revendications précédentes, **caractérisé en ce que** l'élément de d'habillage (1) est formé par une peau extérieure d'habillage d'un hayon ou d'une porte.

9. Hayon de véhicule comportant une peau d'habillage (1) et un élément de renfort (3) solidarisé à la peau d'habillage (1) par un cordon de colle (4) pour former un sous-ensemble selon l'une quelconque des revendications 1 à 7.

10. Porte de véhicule comportant une peau d'habillage (1) et un élément de renfort (3) solidarisé à la peau d'habillage (1) par un cordon de colle (4) pour former un sous-ensemble selon l'une quelconque des revendications 1 à 7.

## Patentansprüche

1. Untereinheit, die ein Verkleidungselement (1) und ein Verstärkungselement (3) umfasst, wobei das Verstärkungselement (3) starr durch eine Klebenaht (4) an dem Verkleidungselement (1) fest verbunden ist, **dadurch gekennzeichnet, dass** mindestens ein Ende der Klebenaht (4) einen gebogenen Teil (41) umfasst, der einen Halbkreisteil (42) aufweist.

2. Untereinheit nach Anspruch 1, **dadurch gekennzeichnet, dass** der Halbkreisteil (42) einen Biegungsdurchmesser (D1) von mindestens 5 mm aufweist.

3. Untereinheit nach Anspruch 1 oder 2, **dadurch gekennzeichnet, dass** das Verstärkungselement (3) eine Befestigungsoberfläche (31) umfasst, entlang welcher die Klebenaht (4) positioniert ist, wobei die Befestigungsoberfläche (31) eine gestreckte Form aufweist.

4. Untereinheit nach Anspruch 3, **dadurch gekennzeichnet, dass** der gebogene Teil (41) der Klebenaht (4) in der Nähe eines der freien Enden der Befestigungsoberfläche (31) des Verstärkungselements (3) positioniert ist.

5. Untereinheit nach Anspruch 4, **dadurch gekennzeichnet, dass** das freie Ende der Befestigungsoberfläche (31) des Verstärkungselements (3) eine seitliche Ausstülpung (33) umfasst, die einen Träger an einem Teil des gebogenen Teils (41) der Klebenaht (4) bildet.

6. Untereinheit nach einem der vorstehenden Ansprüche, **dadurch gekennzeichnet, dass** die Untereinheit auch ein Auskleidungselement (2) umfasst, das einen Träger für das Verstärkungselement (3) und das erste Verkleidungselement (1) bildet.

7. Untereinheit nach dem vorstehenden Anspruch, **dadurch gekennzeichnet, dass** das Auskleidungselement (2) Befestigungspratzen (5) umfasst, die es ihm erlauben, direkt an dem Auskleidungselement (2) und an dem Verkleidungselement (1) fest verbunden zu sein.

8. Fahrzeug, das eine Untereinheit nach einem der vorstehenden Ansprüche umfasst, **dadurch gekennzeichnet, dass** das Verkleidungselement (1) aus einer Verkleidungsaußenhaut einer Heckklappe oder einer Tür gebildet ist.

9. Fahrzeugheckklappe, die eine Verkleidungshaut (1) und ein Verstärkungselement (3), das mit der Verkleidungshaut (1) durch eine Klebenaht (4) fest verbunden ist, umfasst, um eine Untereinheit nach einem der Ansprüche 1 bis 7 zu bilden.

10. Fahrzeugtür, die eine Verkleidungshaut (1) und ein Verstärkungselement (3), das mit der Verkleidungshaut (1) durch eine Klebenaht (4) fest verbunden ist, umfasst, um eine Untereinheit nach einem der Ansprüche 1 bis 7 zu bilden.

## Claims

1. A subassembly comprising a trim element (1) and a reinforcement element (3), the reinforcement element (3) being rigidly secured to the trim element (1) by a bead of adhesive (4), **characterized in that** at least one end of the bead of adhesive (4) comprises a curved part (41) which has a semi-circular part (42).

2. The subassembly according to Claim 1, **characterized in that** said semi-circular part (42) has a bend diameter (D1) of at least 5 mm.

3. The subassembly according to Claim 1 or 2, **characterized in that** the reinforcement element (3) comprises an attachment surface (31) along which the bead of adhesive (4) is positioned, said attachment surface (31) having an elongate shape.

4. The subassembly according to Claim 3, **characterized in that** the curved part (41) of the bead of adhesive (4) is positioned close to one of the free ends of the attachment surface (31) of the reinforcement element (3) .

5. The subassembly according to Claim 4, **characterized in that** said free end of the attachment surface (31) of the reinforcement element (3) comprises a lateral excrescence (33) which forms a support to a part of the curved part (41) of the bead of adhesive (4).

6. The subassembly according to any one of the preceding claims, **characterized in that** the subassembly also comprises a lining element (2) which forms a support for the reinforcement element (3) and for the trim element (1).

7. The subassembly according to the preceding claim, **characterized in that** the lining element (2) comprises attachment lugs (5) permitting it to be directly secured to the lining element (2) and to the trim element (1).

8. A vehicle comprising a subassembly according to any one of the preceding claims, **characterized in that** the trim element (1) is formed by an outer trim skin of a tailgate or of a door.

9. A vehicle tailgate comprising a trim skin (1) and a reinforcement element (3) secured to the trim skin (1) by a bead of adhesive (4) to form a subassembly according to any one of Claims 1 to 7.

10. A vehicle door comprising a trim skin (1) and a reinforcement element (3) secured to the trim skin (1) by a bead of adhesive (4) to form a subassembly according to any one of Claims 1 to 7.
